# EUROPEAN PATENT APPLICATION

(11) **EP 4 132 049 A1**
(43) Date of publication of application: **08.02.2023**
(21) Application number: 21804707.4
(22) Date of filing: 05.02.2021
(51) Int. Cl.: H04W 12/06

(54) **COMMUNICATION SYSTEM, SERVER, AND COMMUNICATION METHOD AND APPARATUS**

(30) Priority: 14.05.2020 CN 202010408020
(71) Applicant: Huawei Technologies Co., Ltd., Shenzhen, Guangdong 518129 (CN)
(72) Inventor: ZHAO, Mingyu, Shenzhen, Guangdong 518129 (CN); YAN, Xueqiang, Shenzhen, Guangdong 518129 (CN); SUN, Huan, Shenzhen, Guangdong 518129 (CN)
(74) Representative: Huawei European IPR
(86) International application number: PCT/CN2021/075621
(87) International publication number: WO 2021/227579

(57) **Abstract**

This application relates to the field of communication technologies, and provides a communication system, a server, and a communication method and apparatus. The communication system includes a multi-access edge computing MEC and a digital reflection DR, at least one DR is deployed on the MEC, the DR corresponds to one group of terminal devices, and one group of terminal devices include at least one terminal device. The DR may provide a service for the group of terminal devices corresponding to the DR. The DR has at least one core network function, where the core network function includes at least one of mobility management, unified data management, session management, policy management, and access authentication and authorization. A DR having the core network function is deployed on the MEC, so that the DR may provide a service for the terminal device. Even if one DR is faulty, a terminal device in another group is not affected and can still receive a service in the communication system. This avoids a single-point failure problem.

## Description

### CROSS-REFERENCE TO RELATED APPLICATIONS

This application claims priority to Chinese Patent Application No. 202010408020.8, filed with the China National Intellectual Property Administration on May 14, 2020 and entitled "COMMUNICATION SYSTEM, SERVER, AND COMMUNICATION METHOD AND APPARATUS", which is incorporated herein by reference in its entirety.

### TECHNICAL FIELD

This application relates to the field of communication technologies, and in particular, to a communication system, a server, and a communication method and apparatus.

### BACKGROUND

A conventional communication system is established based on network deployment of an operator, and a core network is disposed in different geographical areas. Functions of a plurality of network elements are integrated into the core network, for example, functions of a mobility management network element, a session management network element, a user data management network element, and a policy management network element. A communication service may be provided for a terminal device in each area by using the core network. For example, if a terminal device A is located in an area A, a communication service is provided for the terminal device A by using a core network in the area A. If the terminal device A moves to an area B, a communication service is provided for the terminal device by using a core network in the area B.

Once a core network in an area is faulty, all terminal devices in the area cannot perform a normal communication service, or a network element in a core network in the area is faulty, all terminal devices in the area cannot perform a normal communication service. In other words, a single-point failure problem occurs.

### SUMMARY

Embodiments of this application provide a communication system, a server, and a communication method and apparatus, to resolve a single-point failure problem in a communication system.

According to a first aspect, an embodiment of this application provides a communication system, including a multi-access edge computing (multi-access edge computing, MEC) and a digital reflection (digital reflection, DR), where at least one DR is deployed on the MEC, the DR corresponds to one group of terminal devices, and the group of terminal devices include at least one terminal device; and the DR is configured to provide a service for the group of terminal devices corresponding to the DR, and the DR has at least one core network function, where the core network function includes mobility management, unified data management, session management, policy management, and/or access authentication and authorization.

In the communication system, the DR has at least one core network function, and one DR serves only one group of terminal devices. Even if one DR is faulty, another DR is not affected and can still provide a service for a terminal device in another group. This avoids a single-point failure problem, and the terminal device can better receive a service in the communication system.

In a possible implementation, the communication system may further include a life cycle management (life cycle management, LCM) system, where the LCM is configured to manage operation information of the DR, the DR operation information includes a life cycle of the DR and an address of the DR, and the life cycle indicates creation time information and deletion time information of the DR.

The operation information of the DR is managed by using the LCM, to better manage and control operation behavior of the DR in the communication system, so that the DR can provide a better service for the terminal device.

In a possible implementation, the LCM is specifically configured to: create a DR for a first terminal device that newly joins the communication system; or when the first terminal device migrates from a first MEC to a second MEC reconstruct a corresponding DR for the first terminal device on the second MEC, or when the first terminal device migrates from a first MEC to a second MEC, reconstruct a corresponding DR for the first terminal device on the second MEC, and delete a DR corresponding to the first terminal device on the first MEC, where the first MEC and the second MEC are different.

The DR is managed by using the LCM, so that the DR can provide a better service for the terminal device.

In a possible implementation, the LCM is specifically configured to: determine DRs that meet a preset condition and that are in the DRs as a DR group, where the preset condition is that the DRs belong to a same specified service group.

The DRs that meet the preset condition are determined as the DR group, so that a same service is provided for the DRs in the DR group.

In a possible implementation, the LCM may be further configured to: when a first DR in the DR group stops serving the specified service group, delete the first DR.

The DR is deleted from the DR group, to prevent a configuration resource of the DR group from being consumed by a DR that does not belong to the DR group, and ensure security of the DR group.

In a possible implementation, the communication system may further include a distributed mapping system (distributed mapping system, DMS), where the DMS is configured to store one or more of the following correspondences:
a correspondence between an identifier of the DR and the address of the DR; a correspondence between an identifier of the terminal device and an address of the terminal device; a correspondence between an identifier of the terminal device identifier and an identifier of the DR; a correspondence between an address of the terminal device and the address of the DR; a correspondence between an identifier of the DR and an address of the terminal device; a correspondence between an identifier of the terminal device and the address of the DR; and a correspondence between a user identity carried by the terminal device and an identifier of the DR.

The DMS stores the correspondences, so that the terminal device or the DR can be found more quickly based on the correspondences.

In a possible implementation, the communication system may further include a distributed data management system (distributed data provisioning system, DDPS), where the DDPS is configured to store operation data that is generated when the terminal device and a DR corresponding to the terminal device execute a service, user subscription information, and/or user personal identity information.

The communication system stores data information by using the DDPS, so that data can be accessed anytime and anywhere.

In a possible implementation, storage information of the DR includes: the correspondence between the identifier of the DR and the address of the DR, the correspondence between the identifier of the terminal device and the address of the terminal device, the correspondence between the identifier of the terminal device and the identifier of the DR, the correspondence between the address of the terminal device and the address of the DR, the correspondence between the identifier of the DR and the address of the terminal device, and the correspondence between the identifier of the terminal device and the address of the DR.

The DR accurately determines, by using the storage information of the DR, the identifier of the terminal device and the address of the terminal device that correspond to the DR, so that the DR can provide a better service for the terminal device corresponding to the DR.

According to a second aspect, an embodiment of this application provides a server, where the server is deployed on an MEC, at least one DR is deployed on the MEC, the DR corresponds to one group of terminal devices, and the group of terminal devices include at least one terminal device; and the DR is configured to provide a service for the group of terminal devices corresponding to the DR, and the DR has at least one core network function, where the core network function includes mobility management, unified data management, session management, policy management, and/or access authentication and authorization.

The DR in the server has at least one core network function, and one DR serves only one group of terminal devices. Even if one DR is faulty, another DR is not affected and can still provide a service for a terminal device in another group. This avoids a single-point failure problem, and the terminal device can better receive a service in a communication system.

In a possible implementation, the server further includes a DMS. The DMS is configured to store one or more of the following correspondences: a correspondence between an identifier of the DR and an address of the DR; a correspondence between an identifier of the terminal device and an address of the terminal device; a correspondence between an identifier of the terminal device and an identifier of the DR; a correspondence between an address of the terminal device and an address of the DR; a correspondence between an identifier of the DR and an address of the terminal device; a correspondence between an identifier of the terminal device and an address of the DR; and a correspondence between a user identity carried by the terminal device and an identifier of the DR.

The DMS stores the correspondences, so that the terminal device or the DR can be found more quickly based on the correspondences.

In a possible implementation, the server further includes a DDPS, where the DDPS is configured to store operation data that is generated when the terminal device and a DR corresponding to the terminal device execute a service, user subscription information, and/or user personal identity information.

The DDPS stores data information, so that data can be accessed anytime and anywhere.

In a possible implementation, storage information of the DR includes: the correspondence between the identifier of the DR and the address of the DR, the correspondence between the identifier of the terminal device and the address of the terminal device, the correspondence between the identifier of the terminal device and the identifier of the DR, the correspondence between the address of the terminal device and the address of the DR, the correspondence between the identifier of the DR and the address of the terminal device, and the correspondence between the identifier of the terminal device and the address of the DR.

The DR accurately determines, by using the storage information of the DR, the identifier of the terminal device and the address of the terminal device that correspond to the DR, so that the DR can provide a better service for the terminal device corresponding to the DR.

According to a third aspect, an embodiment of this application provides a communication method. The method includes: When a terminal device migrates from a first MEC to a second MEC, the terminal device receives indication information of the second MEC, where the indication information indicates an association relationship between the terminal device and a second DR, and the second DR is a DR that is in the second MEC and that corresponds to the terminal device; and the terminal device establishes a connection to the second DR based on the indication information.

The method may be applied to a communication system. The communication system includes an MEC and a DR, at least one DR is deployed on the MEC, the DR corresponds to one group of terminal devices, and one group of terminal devices include at least one terminal device. The DR is configured to provide a service for the group of terminal devices corresponding to the DR. The DR has at least one core network function, where the core network function includes mobility management, unified data management, session management, policy management, and/or access authentication and authorization.

According to the communication method, it can be ensured that when cross-MEC migration occurs on the terminal device, a connection between the terminal device and the DR can still be maintained, to facilitate receiving of a service.

In a possible implementation, the terminal device updates first storage information of the terminal device to second storage information based on the indication information, where the first storage information includes a correspondence between an identifier of the terminal device and an address of a first DR, the second storage information includes a correspondence between the identifier of the terminal device and an address of a second DR, and the first DR is a DR that is in the first MEC and that corresponds to the terminal device; and the terminal device establishes a connection to the second DR based on the second storage information.

According to the implementation, the terminal device may establish a connection to the DR by using the indication information of the MEC, to facilitate receiving of a service.

According to a fourth aspect, an embodiment of this application provides a communication method. The method includes: A second DR receives indication information of a second MEC, where the second DR is a DR that is in the second MEC and that corresponds to a terminal device, the second MEC is an MEC connected to the terminal device after the terminal device migrates from a first MEC, and the indication information indicates an association relationship between the terminal device and the second DR; and the second DR establishes a connection to the terminal device based on the indication information.

The method is applied to a communication system. The communication system includes an MEC and a DR, at least one DR is deployed on the MEC, the DR corresponds to one group of terminal devices, and one group of terminal devices include at least one terminal device. The DR is configured to provide a service for the group of terminal devices corresponding to the DR. The DR has at least one core network function, where the core network function includes mobility management, unified data management, session management, policy management, and/or access authentication and authorization.

According to the communication method, it can be ensured that when cross-MEC migration occurs on the terminal device, a connection between the terminal device and the DR can still be maintained, so that the DR can provide a better service for the terminal device.

In a possible implementation, the second DR determines second storage information based on the indication information, where the second storage information includes a correspondence between an identifier of the terminal device and an address of the second DR; and the second DR establishes a connection to the terminal device based on the second storage information.

According to the implementation, the DR may establish a connection to the terminal device by using the indication information of an MEC, so that the DR can provide a better service for the terminal device.

In a possible implementation, the second DR receives context information of a first DR, where the context information includes operation data that is generated when the first DR executes a service, user subscription information, and/or user personal identity information, and the first DR is a DR that is in the first MEC and that corresponds to the terminal device; and the second DR updates context information of the second DR based on the context information of the first DR.

According to the implementation, the context information of the first DR may be migrated to the second DR, so that the second DR can provide a better service for the terminal device.

According to a fifth aspect, an embodiment of this application provides a communication apparatus. The apparatus includes a transceiver unit and a creation unit. The transceiver unit is configured to: when a terminal device migrates from a first MEC to a second MEC, receive indication information of the second MEC, where the indication information indicates an association relationship between the terminal device and a second DR, and the second DR is a DR that is in the second MEC and that corresponds to the terminal device. The creation unit is configured to establish a connection to the second DR based on the indication information.

The apparatus is applied to a communication system. The communication system includes a multi-access edge computing MEC and a digital reflection DR, at least one DR is deployed on the MEC, the DR corresponds to one group of terminal devices, and one group of terminal devices include at least one terminal device. The DR is configured to provide a service for the group of terminal devices corresponding to the DR. The DR has at least one core network function, where the core network function includes mobility management, unified data management, session management, and/or access authentication and authorization.

The apparatus is used when cross-MEC migration occurs on the terminal device, a connection between the terminal device and the DR can still be maintained, so that the terminal device can better receive a service.

In a possible implementation, the creation unit may update first storage information of the terminal device to second storage information based on the indication information, and establish a connection to the second DR based on the second storage information. The first storage information includes a correspondence between an identifier of the terminal device and an address of a first DR, the second storage information includes a correspondence between the identifier of the terminal device and an address of a second DR, and the first DR is a DR that is in the first MEC and that corresponds to the terminal device.

The apparatus is used, so that the terminal device may establish a connection to the DR by using the indication information of the MEC, to facilitate receiving of a service.

According to a sixth aspect, an embodiment of this application provides a communication apparatus. The apparatus includes a transceiver unit and a creation unit. The transceiver unit is configured to receive indication information of a second MEC, where a second DR is a DR that is in the second MEC and that corresponds to a terminal device, the second MEC is an MEC connected to the terminal device after the terminal device migrates from a first MEC, and the indication information indicates an association relationship between the terminal device and the second DR. The creation unit is configured to establish a connection to the terminal device based on the indication information.

The apparatus is applied to a communication system. The communication system includes a multi-access edge computing MEC and a digital reflection DR, at least one DR is deployed on the MEC, the DR corresponds to one group of terminal devices, and one group of terminal devices include at least one terminal device. The DR is configured to provide a service for the group of terminal devices corresponding to the DR. The DR has at least one core network function, where the core network function includes mobility management, unified data management, session management, and/or access authentication and authorization.

The apparatus is used when cross-MEC migration occurs on the terminal device, a connection between the terminal device and the DR can still be maintained, so that the DR can provide a better service for the terminal device.

In a possible implementation, the creation unit may determine second storage information based on the indication information, and establish a connection to the terminal device based on the second storage information, where the second storage information includes a correspondence between an identifier of the terminal device and an address of the second DR.

The apparatus is used, so that the DR may establish a connection to the terminal device by using the indication information of the MEC, and the DR can provide a better service for the terminal device.

In a possible implementation, the apparatus further includes a context transceiver unit, configured to: receive context information of a first DR, and update context information of the second DR based on the context information of the first DR, where the context information includes operation data that is generated when the first DR executes a service, user subscription information, and/or user personal identity information; and the first DR is a DR that is in the first MEC and that corresponds to the terminal device.

The apparatus may migrate the context information of the first DR to the second DR, so that the second DR can provide a better service for the terminal device.

According to a seventh aspect, an embodiment of this application provides a communication apparatus. The apparatus includes a processor and a memory. The memory is configured to store computer-executable instructions. When the apparatus runs, the processor executes the computer-executable instructions stored in the memory, to enable the apparatus to perform the solution according to any embodiment of the third aspect or the fourth aspect.

According to an eighth aspect, an embodiment of this application provides a computer-readable storage medium. The computer storage medium stores computer-readable instructions. When a computer reads and executes the computer-readable instructions, the computer is enabled to perform the solution according to any embodiment of the third aspect or the fourth aspect.

According to a ninth aspect, an embodiment of this application provides a computer program product. When a computer reads and executes the computer program product, the computer is enabled to perform the solution according to any embodiment of the third aspect or the fourth aspect.

### BRIEF DESCRIPTION OF DRAWINGS

FIG. 1 is a schematic diagram of an architecture of a communication system;
FIG. 2 is a schematic diagram of an architecture of a communication system according to an embodiment of this application;
FIG. 3 is a schematic diagram of DR operation function items according to an embodiment of this application;
FIG. 4 is a schematic diagram of an architecture of a communication system according to an embodiment of this application;
FIG. 5 is a schematic diagram of user identity authentication according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic diagram of a communication method according to an embodiment of this application;
FIG. 9 is a schematic flowchart of data transmission according to an embodiment of this application;
FIG. 10 is a schematic diagram of a structure of a communication apparatus according to an embodiment of this application;
FIG. 11 is a schematic diagram of a structure of a communication apparatus according to an embodiment of this application; and
FIG. 12 is a schematic diagram of a structure of a communication apparatus according to an embodiment of this application.

### DESCRIPTION OF EMBODIMENTS

To make the objectives, technical solutions, and advantages of this application clearer, the following describes the technical solutions in embodiments of this application in detail with reference to the accompanying drawings in embodiments of this application.

The following describes some terms in embodiments of this application, to facilitate understanding of a person skilled in the art.
(1) A terminal device is a device that provides voice and/or data connectivity for a user. For example, the terminal device includes a handheld device, a vehicle-mounted device, and the like that have a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), a wireless terminal in a smart home (smart home), or the like.
(2) A network device is a device that provides a wireless communication function for a terminal device, and includes but is not limited to a gNB in the 5th generation mobile communication technology (5th generation mobile networks, 5G), a radio network controller (radio network controller, RNC), a nodeB (node B, NB), a base station controller (base station controller, BSC), a base transceiver station (base transceiver station, BTS), a home eNode B (for example, a home evolved node B, or a home node B, HNB), a baseband unit (baseband unit, BBU), a transmission point (transmitting and receiving point, TRP), a transmitting point (transmitting point, TP), a mobile switching center, and the like. Alternatively, the base station in this application may be a device that provides a wireless communication function for the terminal device in another communication system that may appear in the future.
(3) A core network includes one or more network elements, may include a mobility management network element, a session management network element, a user data management network element, and a policy management network element, and is mainly configured to process data and obtain a routing service request address.
(4) An MEC is a small-scale cloud data center distributed at a network edge and provides real-time data processing, analysis, and decision-making for a terminal device.
(5) A DR is equivalent to an agent of one group of terminal devices of a user in a digital world. One digital reflection provides a communication service for only one group of terminal devices of the user, has at least one core network function, is communicatively connected to one group of terminal devices of the user, and may allocate network resources to a user nearby, to provide a better service for the user.

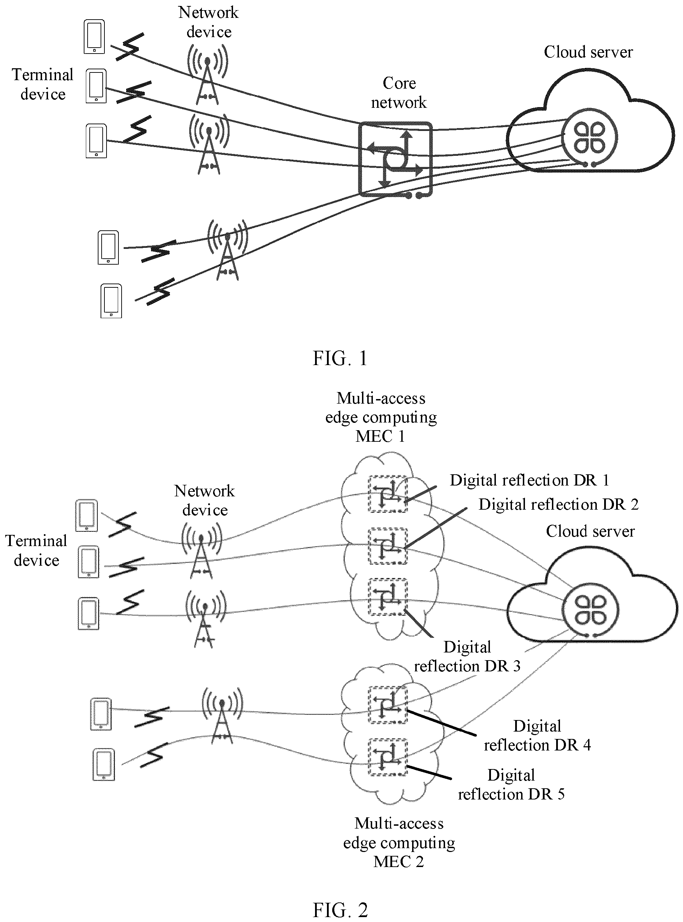

FIG. 1 is a schematic diagram of an architecture of a communication system. The communication system includes a core network, a plurality of network devices, a plurality of terminal devices, and a cloud server. It should be noted that the cloud server may be a server of an application program (application program, APP) vendor, or may be a server of an operator. A user may send a service request to a network device by using a terminal device, and then send the service request to a core network by using the network device. The core network invokes a service required by the user on a cloud server. For example, if a service request of a user A is downloading an APP 1, a terminal device of the user A sends a service request for downloading the APP1 to the network device, the network device sends the service request for downloading the APP 1 to the core network, and the core network invokes an address of a cloud server on which the APP 1 is located, and accurately sends the address to the terminal device of the user A. In this way, the user A can accurately download the APP 1. Alternatively, if the service request of the user A is calling a user B, the terminal device of the user A sends the service request to the network device, the network device sends the service request for calling the user B to the core network, and the core network invokes a server of an operator to execute the service request for calling the user B. In this way, the user A and the user B communicate with each other.

However, in the communication system, the core network needs to serve a plurality of network devices. Therefore, the core network is usually deployed at a location that can cover a large quantity of network devices. However, although some network devices that are far away from the core network are located in an area covered by the core network, quality of an obtained communication service may be poor. In addition, once the core network is faulty, the plurality of network devices covered by the core network cannot serve the terminal device. Therefore, a single-point failure problem occurs.

In view of this, an embodiment of this application provides a communication system. The communication system can resolve the single-point failure problem, to provide a better service for a terminal device.

The following describes in detail the communication system provided in this application with reference to FIG. 2 to FIG. 12.

FIG. 2 is a schematic diagram of an architecture of the communication system according to an embodiment of this application. The communication system includes a plurality of MECs and a plurality of DRs. Further, optionally, the communication system may further include a plurality of network devices, a plurality of terminal devices, and a cloud server. At least one DR is deployed on the MEC. For ease of solution description, FIG. 2 shows an example in which three DRs are deployed on an MEC 1 and two DRs are deployed on an MEC 2. However, in an actual application, a plurality of DRs may be deployed on each MEC. Details are not described herein. The DR has a core network function. The core network function includes at least one of the following: mobility management, unified data management, session management, policy management, and access authentication and authorization.

For example, the mobility management may represent management of location information, security, and service continuity of a terminal device, so that the terminal device can perform a communication service at any location to which the terminal device moves. The unified data management may represent management of operation data of a terminal device. The session management can implement a function of a session management function (session management function, SMF) network element in 5G. The policy management controls quality of a service required by a user, to provide differentiated services for the user. The access authentication and authorization refers to authentication of an identity of a user who accesses a communication system and authorization of a terminal device of the user who accesses the communication system.

It should be noted that, after a user subscribes to a management organization (that is, an operator) of the communication system, a terminal device of the user may be added to the communication system to receive a service. The terminal device may correspond to one DR. When another terminal device of the user needs to receive a service by using the communication system, the another terminal device of the user also receives the service by using the DR. The DR may correspond to one group of terminal devices. In other words, one DR may provide a service for the group of terminal devices. For example, terminal devices of a user A that subscribe to the management organization of the communication system include: a mobile phone, a tablet computer, and a notebook computer, and the terminal devices of the user A may form one group of terminal devices corresponding to a DR 1. A call service may be provided for the mobile phone of the user A by using the DR 1, and a website address may be obtained by invoking a server corresponding to the website by using the DR 1, so that the website address may be accessed by using the tablet computer or the notebook computer of the user A.

Because one DR serves one group of terminal devices, once one DR is faulty, only one group of terminal devices corresponding to the DR cannot receive a service by using the communication system, and terminal devices in another group corresponding to another DR can still receive a service by using the communication system. This avoids a single-point failure problem. As shown in FIG. 2, a DR 1, a DR 2, and a DR 3 are deployed on the MEC 1, and a DR 4 and a DR 5 are deployed on the MEC 2. The DR 1 serves one group of terminal devices of the user A, the DR 2 serves one group of terminal devices of a user B, and the DR 3 serves one group of terminal devices of a user C. Even if the DR 1 is faulty, the DR 2 is not affected and can still provide a service for the group of terminal devices of the user B. In addition, the DR 3 is not affected and can still provide a service for the group of terminal devices of the user C. In other words, a single-point failure problem is avoided.

For example, to better manage a DR, the communication system provided in this embodiment of this application may further include an LCM. The LCM is mainly configured to manage operation information of the DR, where the operation information of the DR may include a life cycle of the DR and an address of the DR, and the life cycle indicates creation time information and deletion time information of the DR.

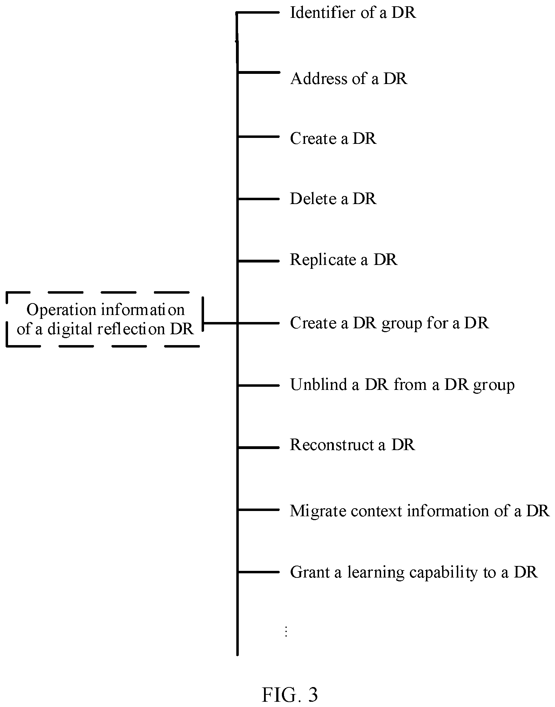

It should be noted that the LCM records the operation information of the DR in the communication system from a time point at which the DR is created to a time point at which the DR is deleted. FIG. 3 schematically describes operation function items of operation information of a DR. The operation function items may include but are not limited to at least one of the following: an identifier of the DR; an address of the DR; creating the DR; deleting the DR; replicating the DR; establishing a DR group for the DR; unbinding the DR from a DR group; reconstructing the DR; migrating context information of the DR; and granting a learning capability to the DR.

The identifier of the DR is a unique identifier of the DR in a communication system. The identifier of the DR may be represented by using readable code or another code. A specific manner of representing the identifier of the DR is not specifically limited herein in this application. Any code determined in the communication system according to a preset encoding rule to represent the identifier of the DR is applicable to this application. The address of the DR is a routable address of a device, that is, an address of the DR on an MEC. Any device can accurately find the DR by accessing the address of the DR. For example, an address of a DR 1 on the MEC is RLOC_{R1}, a terminal device may find the DR 1 by using the RLOC_{R1}, or a network device may find the DR 1 by using the RLOC_{R1}. Creating the DR is to create a DR for a first terminal device that newly joins the communication system. After a user completes subscription to a management organization of the communication system, a DR is correspondingly generated for a terminal device of the subscribed user by using an LCM, and an identifier is configured for the DR. In addition, the LCM further records an address of the DR, to provide a better service for the terminal device of the subscribed user.

If a subscribed user in the communication system terminates the subscription to the management organization of the communication system, a DR corresponding to a terminal device of the user may be deleted. Replicating the DR is to replicate a DR during DR backup to avoid data loss in the DR. Establishing the DR group for a DR is to determine DRs that meet a preset condition as the DR group. The preset condition is that the DRs belong to a same specified service group. For example, DRs corresponding to terminal devices of users in a same company form a DR group, or DRs corresponding to terminal devices of users in a same school form a DR group, and a unified service may be provided for terminal devices in the DR group, for example, a technical journal of a website is pushed to the DR group, so that each DR in the DR group can receive the pushed technical journal. However, when a first DR in the DR group stops serving the specified service group, the first DR is deleted. For example, if a user of a company resigns, a DR corresponding to the user may be deleted from the DR group. The DR deleted from the DR group cannot receive a service provided by the DR group. This ensures security of the DR group.

When a first terminal device migrates from a first MEC to a second MEC, a corresponding DR may be reconstructed for the first terminal device on the second MEC, and a DR corresponding to the first terminal device on the first MEC is deleted, where the first MEC and the second MEC are different. The DR corresponding to the first terminal device on the first MEC and the DR that is reconstructed on the second MEC and that corresponds to the first terminal device have a same identifier, but have different addresses. For example, an identifier of a DR corresponding to a terminal device 1 is DR 1, and the terminal device 1 migrates from a MEC 1 to a MEC 2. An identifier of the DR corresponding to the terminal device 1 on the MEC 1 is DR 1, and an address of the DR is RLOC_{R1}. An identifier of the DR corresponding to terminal device 1 on the MEC 2 is DR 1, and an address of the DR is RLOC_{R1'}.

In addition, if a user A carrying a terminal device moves from a place A to a place B, and the terminal device of the user A is migrated from an MEC in the place A to an MEC in the place B, when the user A does not move, a DR on the MEC in the place A is required to provide a service for the terminal device of the user A. When the user A moves to the place B, a DR corresponding to the terminal device of the user A needs to be reconstructed on the MEC in the place B, and the DR on the MEC in the place A is deleted. In addition, before the DR on the MEC in the place A is deleted, context information of the DR on the MEC in the place A further needs to be migrated to the DR on the MEC in the place B. In this way, the DR on the MEC in the place B can provide a service for the terminal device of the user A. The context information of the DR on the MEC in the place A includes operation data that is generated when the DR on the MEC in the place A executes a service, subscription information of the user A, and personal identity information of the user A.

In addition, when the first terminal device migrates from the first MEC to the second MEC, a corresponding DR may be further reconstructed for the first terminal device on the second MEC. For example, a residence of a user B is a place A, and there is a DR corresponding to a terminal device of the user B on an MEC in the place A. When the user B is on a temporary business trip to a place B, a DR may be reconstructed for the terminal device of the user B on an MEC in the place B. When the user B is on a business trip to the place B, the DR on the MEC in the place A is disabled to provide a service for the terminal device of the user B by using the DR on the MEC in the place B. When the user B returns from the place B to the place A, the DR on the MEC in the place B is disabled or the DR on the MEC in the place B is deleted, and the terminal device of the user B is served by using the DR on the MEC in the place A.

To provide a better service for the terminal device by using the DR, a learning capability may be further assigned to the DR, for example, a language learning capability, an image-text recognition capability, and an analysis and computing capability. This is not specifically limited herein. All capabilities that can be obtained through learning are applicable to this application. For example, if a user arrives in an unfamiliar country and is not fluent in a local language, the user can use the language learning capability of the DR to communicate well with local residents.

For example, to enable devices in the communication system to better communicate with each other, the communication system further includes a DMS. The DMS is deployed on an MEC in a distributed manner. The DMS is configured to store one or more of the following correspondences: a correspondence between an identifier of a DR and the address of the DR, a correspondence between an identifier of a terminal device and an address of the terminal device, a correspondence between an identifier of a terminal device and an identifier of the DR; a correspondence between an address of a terminal device and an address of the DR; a correspondence between an identifier of the DR and an address of a terminal device; a correspondence between an identifier of a terminal device and the address of the DR; and a correspondence between a user identity carried by a terminal device and an identifier of the DR. The correspondence between the identifier of the DR and the address of the DR is a correspondence between a unique identity authentication identifier of the DR in the communication system and an address to which the DR can be routed by a device. For example, if it is known that the identifier of the DR is DR 1, an address of the DR may be determined by querying the correspondence between the identifier of the DR and the address of the DR in the DMS. Alternatively, if it is known that the address of the DR is RLOC_{R1}, and an identifier of the DR may be determined by querying the correspondence between the identifier of the DR and the address of the DR in the DMS.

In a possible implementation, the correspondence between the identifier of the terminal device and the address of the terminal device is a correspondence between an identifier of the terminal device in the communication system and a local address allocated by the MEC to the terminal device. For example, if it is known that the identifier of the terminal device is EID₁, the address of the terminal device may be determined by querying the correspondence between the identifier of the terminal device and the address of the terminal device in the DMS. Alternatively, if it is known that the address of the terminal device is LLOC_{D1}, the identifier of the terminal device may be determined by querying the correspondence between the identifier of the terminal device and the address of the terminal device in the DMS.

In a possible implementation, the correspondence between the identifier of the terminal device and the identifier of the DR is a correspondence between an identifier of the terminal device in the communication system and a unique identity authentication identifier of the DR in the communication system. For example, if it is known that the identifier of the terminal device is EID₁, the identifier of the DR may be determined by querying the correspondence between the identifier of the terminal device and the identifier of the DR in the DMS. Alternatively, if it is known that the identifier of the DR is DR 1, and the identifier of the terminal device may be determined by querying the correspondence between the identifier of the terminal device and the identifier of the DR in the DMS.

In a possible implementation, the correspondence between the address of the terminal device and the address of the DR is a correspondence between a local address allocated by the MEC to the terminal device and an address to which the DR can be routed by a device. For example, if it is known that the address of the terminal device is LLOC_{D1}, the address of the DR may be determined by querying the correspondence between the address of the terminal device and the address of the DR in the DMS. Alternatively, if it is known that the address of the DR is RLOC_{R1}, the address of the terminal device may be determined by querying the correspondence between the address of the terminal device and the address of the DR in the DMS.

In a possible implementation, the correspondence between the identifier of the DR and the address of the terminal device is a correspondence between a unique identity authentication identifier of the DR in the communication system and a local address allocated by the MEC to the terminal device. For example, if it is known that the identifier of the DR is DR 1, the address of the terminal device may be determined by querying the correspondence between the identifier of the DR and the address of the terminal device in the DMS. Alternatively, if it is known that the address of the terminal device is LLOC_{D1}, and the identifier of the DR may be determined by querying the correspondence between the identifier of the DR and the address of the terminal device in the DMS.

In a possible implementation, the correspondence between the identifier of the terminal device and the address of the DR is a correspondence between an identifier of the terminal device in the communication system and an address to which the DR can be routed by a device. For example, if it is known that the identifier of the terminal device is EID₁, the address of the DR may be determined by querying the correspondence between the identifier of the terminal device and the address of the DR in the DMS. Alternatively, if it is known that the address of the DR is RLOC_{R1}, the identifier of the terminal device may be determined by querying the correspondence between the identifier of the terminal device and the address of the DR in the DMS.

In a possible implementation, the correspondence between the user identity carried by the terminal device and the identifier of the DR is a correspondence between a unique identity authentication identifier of the terminal device in the communication system and a unique identity authentication identifier of the DR in the communication system. The user identity carried by the terminal device and the identifier of the DR can be accurately determined by using the correspondence. The user identity carried by the terminal device is equivalent to an international mobile subscriber identity (international mobile subscriber identity, IMSI) in the fourth generation mobile communication technology (the 4th generation mobile communication technology, 4G), and is equivalent to an international mobile subscriber identity (subscription permanent identifier, SUPI) in 5G. For example, if it is known that the user identity carried by the terminal device is ***, the identifier of the DR may be determined by querying the correspondence between the user identity carried by the terminal device and the identifier of the DR in the DMS. Alternatively, if it is known that the identifier of the DR is DR 1, the user identity carried by the terminal device may be determined by querying the correspondence between the user identity carried by the terminal device and the identifier of the DR in the DMS.

It should be noted that correspondences stored in the DMS are updated in real time, to ensure accuracy of querying the correspondences stored in the DMS, and provide a better service for a device in the communication system.

For example, to enable devices in the communication system to better communicate with each other, the communication system further includes a DDPS. The DDPS is configured to store operation data that is generated when the terminal device and a DR corresponding to the terminal device execute a service, user subscription information, and/or user personal identity information.

It should be noted that the operation data of the terminal device is operation data generated when the terminal device performs an operation such as making a call or accessing the Internet. The operation data generated when the DR corresponding to the terminal device performs a service is operation data generated when the DR migrates a context and the DR obtains a service. The user subscription information is information generated when a user subscribes to a management organization of the communication system when the user newly joins the communication system. A terminal device of the user can receive, based on the information, a service by using the communication system. The DDPS stores data information, so that data can be accessed anytime and anywhere.

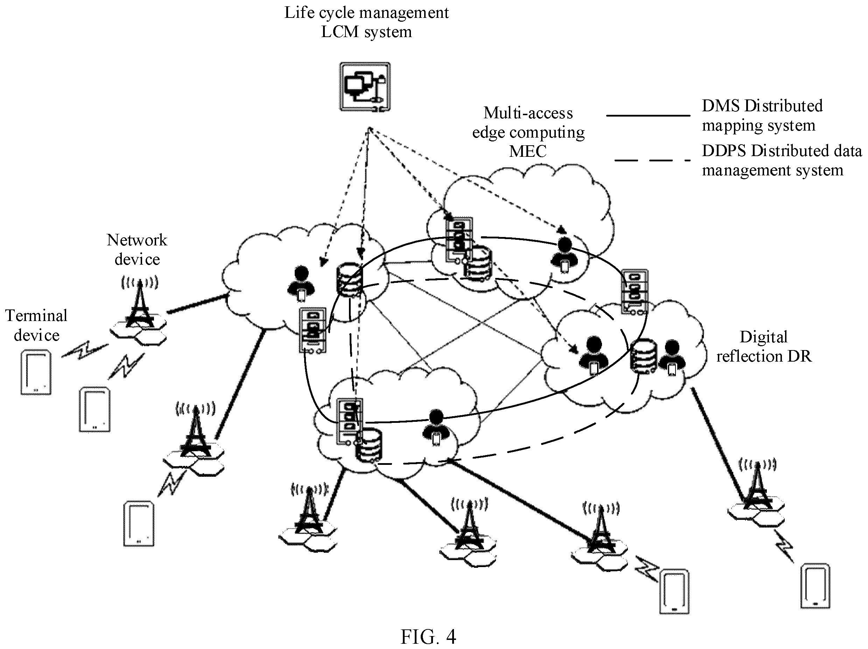

FIG. 4 is a schematic diagram of an architecture of a communication system according to an embodiment of this application. The communication system may include an MEC, a DR, an LCM, a DMS, and a DDPS. FIG. 4 schematically describes the MEC in the communication system by using only four MECs. The DR is deployed on the MEC, the DMS and the DDPS are deployed on the MEC in a distributed manner, each MEC may cover a plurality of network devices, and a terminal device of a user receives a service provided by the communication system by using a network device. Based on the foregoing description, the LCM is configured to manage operation information of the DR, the DMS is configured to store a correspondence, and the DDPS stores data. Details are not described herein again. The MEC, the DR, the LCM, the DMS, and the DDPS in the communication system provide a service for the terminal device, to ensure that the terminal device can better receive a service.

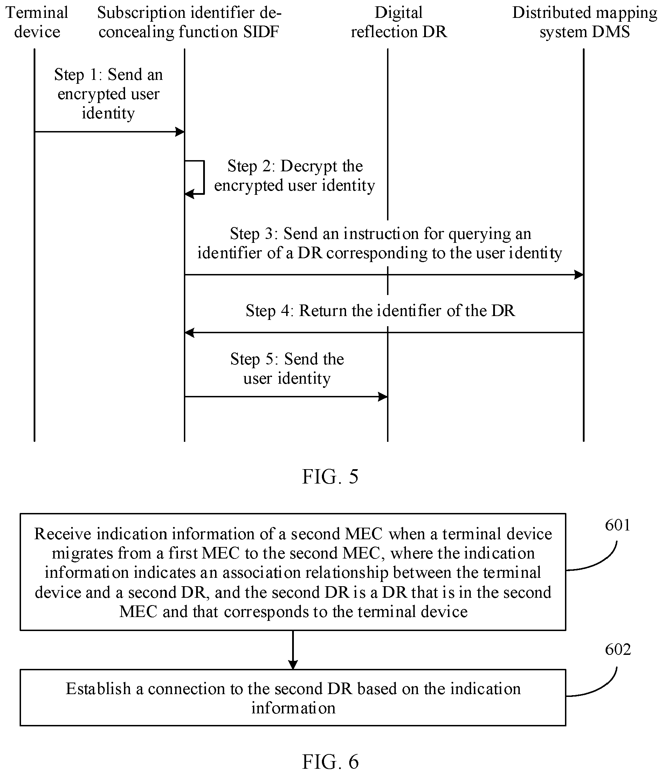

Based on the foregoing communication system, identity authentication needs to be performed for a terminal device that newly joins the communication system. As shown in FIG. 5, the terminal device may perform step 1 to send an encrypted user identity to a user identity decryption function (subscription Identifier de-concealing function, SIDF). The SIDF performs step 2 to decrypt the encrypted user identity to obtain a user identity. Then, the SIDF performs step 3 to send an instruction for querying an identifier of a DR corresponding to the user identity to the DMS. After the DMS performs a query, the DMS performs step 4 to return the identifier of the DR to the SIDF, and the SIDF performs step 5 to send user identity code to a DR corresponding to the identifier of the DR. After that, indication information is sent by using the MEC, so that both of the DR and the terminal device store a correspondence between the identifier of the DR and an identifier of the terminal device and a correspondence between an address of the DR and an address of the terminal device. In this way, the terminal device can directly communicate with a DR corresponding to the DR, or the DR can directly communicate with a terminal device corresponding to the DR. In other words, the DR is dynamically and accurately associated with the terminal device by using the indication information from the MEC at any location to which the terminal device corresponding to the DR moves. After that, the DR sends correspondences between the DR and the terminal device to the DMS, so that the DMS updates the correspondences between the DR and the terminal device in real time. The correspondences include the correspondence between the identifier of the terminal device and the identifier of the DR, and the correspondence between the address of the terminal device and the address of the DR.

For example, in the foregoing communication system, one DR corresponds to one group of terminal devices of a user (the user is a user who subscribes to a management organization of the communication system). The group of terminal devices may include a mobile phone, a tablet computer, and a notebook computer. The group of terminal devices may be operated and used by different users, but different users need to log in to different accounts to operate the group of terminal devices. For example, a user who subscribes to the management organization of the communication system is a user 1, and terminal devices of the user 1 include a mobile phone 1, a tablet computer 1, and a notebook computer 1. The user 1 may log in to the mobile phone 1 by using an account 1.1 to perform an operation, may log in to the tablet computer 1 by using an account 12 to perform an operation, or may log in to the notebook computer 1 by using an account 1.3 to perform an operation. The account 1.1, the account 1.2, and the account 1.3 are all set by the user 1, may be the same or may be different, and may be set based on a requirement of the user 1. This is not specifically limited herein. A user 2 may log in to the mobile phone 1 by using an account 2.1 to perform an operation, may log in to the tablet computer 1 by using an account 2.2 to perform an operation, or may log in to the notebook computer 1 by using an account 2.3 to perform an operation. The account 2.1, the account 2.2, and the account 2.3 are all set by the user 2, may be the same or may be different, and may be set based on a requirement of the user 2. This is not specifically limited herein.

It should be noted that the correspondences in the DMS are updated only when the communication system detects that the subscribed user performs an operation by using the terminal device and moves. The following is an example: The user 1 may log in to the mobile phone 1 by using the account 1.1 to perform an operation, and the user 2 may log in to the tablet computer 1 by using the account 2.2 to perform an operation. The notebook computer 1 is unused, and the user 2 carries the tablet computer to move from a place A to a place B, and does not need to update a correspondence between one group of terminal devices of the user 1 and a corresponding DR in the DMS. When the user 1 carries the mobile phone 1 from the place A to the place B and there is no cross-MEC migration, an address of the terminal device of the user 1 needs to be updated in the DMS. When the user 1 carrying the mobile phone 1 migrates from the place A to the place B, and cross-MEC migration occurs, an address of the terminal device of the user 1 and an address of the DR corresponding to the terminal device of the user 1 need to be updated in the DMS.

In addition, when there is cross-MEC migration, the terminal device may establish a connection to a corresponding DR with reference to the method shown in FIG. 6. The terminal device may first perform step 601 to receive indication information of a second MEC when the terminal device migrates from a first MEC to the second MEC, where the indication information indicates an association relationship between the terminal device and a second DR, and the second DR is a DR that is in the second MEC and that corresponds to the terminal device.

Step 602: Establish a connection to the second DR based on the indication information.

It should be noted that when step 602 is performed, the terminal device may update first storage information of the terminal device to second storage information based on the indication information of the second MEC. The first storage information includes a correspondence between an identifier of the terminal device and an address of a first DR. The second storage information includes a correspondence between the identifier of the terminal device and an address of a second DR. The first DR is a DR that is on the first MEC and that corresponds to the terminal device. The identifier of the first DR is the same as the identifier of the second DR. After the first storage information is updated to the second storage information, the terminal device establishes, based on the second storage information, a connection to the DR corresponding to the terminal device in the second MEC. For example, an identifier of a terminal device 1 is EID₁, and an identifier of a DR corresponding to the terminal device 1 is DR 1. The terminal device 1 initially receives a service provided by the DR under the MEC 1, and then moves to the MEC 2. In this case, a DR needs to be reconstructed for the terminal device 1 on the MEC 2 by using the LCM to provide a service for the terminal device 1. Identifiers of the reconstructed DR on the MEC 2 and the DR on the MEC 1 are the same and are DR 1, but addresses are different. After the MEC 2 allocates an address to the reconstructed DR, the MEC 2 sends indication information to the terminal device 1, and the terminal device 1 updates the address of the DR in the storage information, so that the terminal device 1 establishes a connection to the reconstructed DR under the MEC 2. In this way, the terminal device receives continuous services in the communication system.

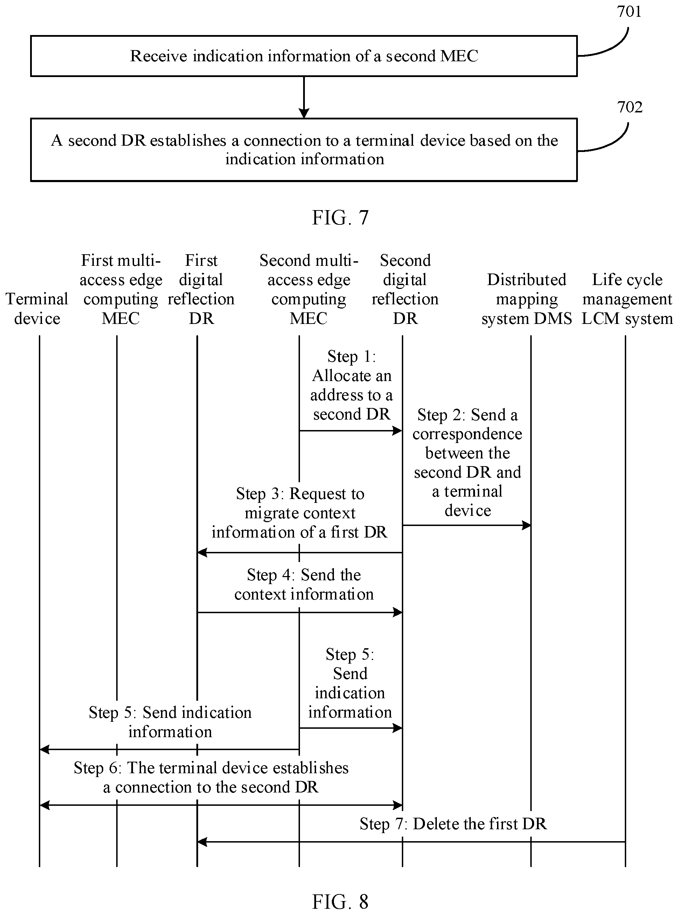

Correspondingly, for the second DR, refer to the method shown in FIG. 7. Step 701 of receiving indication information of a second MEC is performed.

Step 702: Establish a connection to a terminal device based on the indication information.

It should be noted that, when step 702 is performed, the second DR may determine second storage information based on the indication information, where the second storage information includes a correspondence between an identifier of the terminal device and an address of the second DR, and then may establish a connection to the terminal device based on the second storage information.

In addition, the second DR receives context information of the first DR, where the context information includes operation data that is generated when the first DR executes a service, user subscription information, and/or user personal identity information, and updates context information of the second DR based on the context information of the first DR, so that the second DR can provide continuous services for the terminal device.

The second storage information of the terminal device and the storage information of the second DR further include a correspondence between the identifier of the DR and the address of the second DR, a correspondence between an identifier of the terminal device and an address of the terminal device, a correspondence between an identifier of the terminal device and the identifier of the DR, a correspondence between an address of the terminal device and the address of the second DR, and a correspondence between the identifier of the DR and an address of the terminal device, so that the terminal device can accurately determine a DR corresponding to the terminal device, and the terminal device can better receive a service.

When the method shown in FIG. 7 is executed, refer to a schematic diagram shown in FIG. 8. When the communication system determines that the terminal device is migrated from a first MEC to a second MEC, the second MEC indicates an LCM to reconstruct a DR. After the LCM generates the DR by using a DR creation tool, the second MEC performs step 1 of allocating an address to a second DR. The creation tool may be a VM or a Docker, or other tools. Any DR creation tool that can create a DR that meets requirements of this application is applicable to this application. The second DR performs step 2 of sending a correspondence between the second DR and the terminal device to a DMS. Then, the second DR performs step 3 of sending, to a first DR, a request for migrating context information of the first DR. The first DR performs step 4 of sending the context information to the second DR. The second MEC performs step 5 of sending indication information to the second DR and the terminal device. The terminal device performs step 6 of establishing a connection to the second DR. The LCM performs step 7 of deleting the first DR.

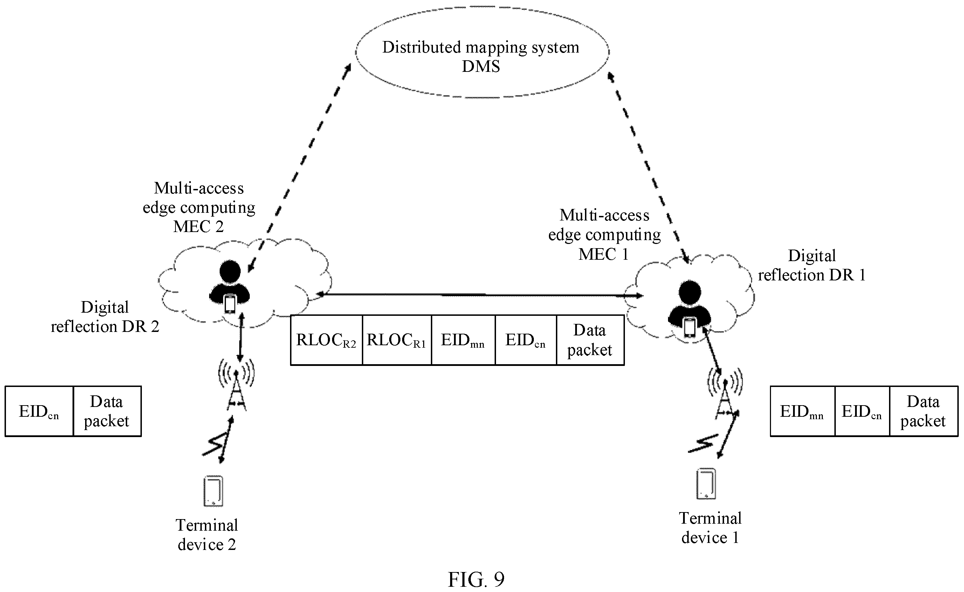

FIG. 9 schematically shows a communication data transmission procedure. The schematic diagram includes a DMS, a MEC 1, a MEC 2, a DR 1, a DR 2, a terminal device 1, a terminal device 2, a base station 1, and a base station 2. Storage information of the terminal device 1 and the DR 1 includes a correspondence between an identifier of the DR 1 and an identifier of the terminal device 1, and a correspondence between an address of the DR 1 and an address of the terminal device 1. Storage information of the terminal device 2 and the DR 2 includes a correspondence between an identifier of the DR 2 and an identifier of the terminal device 2, and a correspondence between an address of the DR 2 and an address of the terminal device 2. If the terminal device 1 needs to send a data packet to the terminal device 2, the terminal device 1 may send the identifier of the terminal device 2, the identifier of the terminal device 1, and the data packet to the DR 1. The DR 1 may query whether the address of the terminal device 2 can be found in a local cache. If the terminal device 1 and the terminal device 2 have transmitted a data packet before, the address of the terminal device 2 may be found in a cache of the DR 1. If the address of the terminal device 2 is not found in a cache of the DR 2, the address of the DR 2 corresponding to the identifier of the terminal device 2 may be queried in the DMS by using the DR 1. The DR 1 may carry the address of the DR 2, the address of the DR 1, the identifier of the terminal device 2, the identifier of the terminal device 1, and the data packet, and send the data packet to the DR 2. The DR 2 may accurately send the identifier of the terminal device 1 and the data packet to the terminal device 2 based on storage information in the DR 2. In FIG. 8, an identifier of a terminal device 1 is illustrated by using EID_{cn}, an identifier of a terminal device 2 is illustrated by using EIDₘₙ, an address of a DR 1 is illustrated by using RLOC_{R1}, and an address of a DR 2 is illustrated by using RLOC_{R2}.

It should be noted that an embodiment of this application further provides a server. The server is deployed on MEC, at least one DR is deployed on the MEC, the DR corresponds to one group of terminal devices, and the group of terminal devices include at least one terminal device. The DR is configured to provide a service for the group of terminal devices corresponding to the DR. The DR has at least one core network function, where the core network function includes mobility management, unified data management, session management, policy management, and/or access authentication and authorization.

The DR in the server has at least one core network function, and one DR serves only one group of terminal devices. Even if one DR is faulty, another DR is not affected and can still provide a service for a terminal device in another group. This avoids a single-point failure problem, and the terminal device can better receive a service.

For example, the server further includes a DMS. The DMS is configured to store one or more of the following correspondences: a correspondence between an identifier of a DR and an address of a DR; a correspondence between an identifier of a terminal device and an address of a terminal device; a correspondence between an identifier of a terminal device and an identifier of a DR; a correspondence between an address of a terminal device and an address of a DR; a correspondence between an identifier of a DR and an address of a terminal device; a correspondence between an identifier of a terminal device and an address of a DR; and a correspondence between a user identity carried by a terminal device and an identifier of a DR.

The DMS stores the correspondences, so that the terminal device or the DR can be found more quickly based on the correspondences.

For example, the server further includes a DDPS, where the DDPS is configured to store operation data that is generated when the terminal device and a DR corresponding to the terminal device execute a service, user subscription information, and/or user personal identity information.

The DDPS stores data information, so that data can be accessed anytime and anywhere.

For example, the storage information of the DR includes a correspondence between the identifier of the DR and the address of the DR, the correspondence between the identifier of the terminal device and the address of the terminal device, the correspondence between the identifier of the terminal device and the identifier of the DR, the correspondence between the address of the terminal device and the address of the DR, the correspondence between the identifier of the DR and the address of the terminal device, and the correspondence between the identifier of the terminal device and the address of the DR.

The DR accurately determines, by using the storage information of the DR, the identifier of the terminal device and the address of the terminal device that correspond to the DR, so that the DR can provide a better service for the terminal device corresponding to the DR.

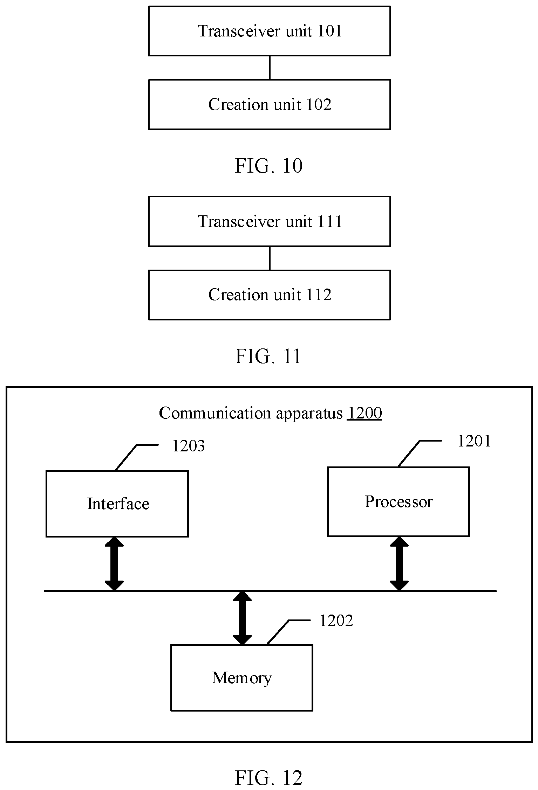

Based on a same technical idea, an embodiment of this application further provides a communication apparatus. As shown in FIG. 10, the apparatus includes a transceiver unit 101 and a creation unit 102.

The transceiver unit 101 is configured to: when a terminal device migrates from a first MEC to a second MEC, receive indication information of the second MEC, where the indication information indicates an association relationship between the terminal device and a second DR, and the second DR is a DR that is in the second MEC and that corresponds to the terminal device.

The creation unit 102 is configured to establish a connection to the second DR based on the indication information.

The apparatus is applied to a communication system. The communication system includes an MEC and a DR, at least one DR is deployed on the MEC, the DR corresponds to one group of terminal devices, and one group of terminal devices include at least one terminal device. The DR is configured to provide a service for the group of terminal devices corresponding to the DR. The DR has at least one core network function, where the core network function includes mobility management, unified data management, session management, policy management, and/or access authentication and authorization.

The apparatus is used when cross-MEC migration occurs on the terminal device, a connection between the terminal device and the DR can still be maintained, so that the terminal device can better receive a service.

In a possible implementation, the creation unit 102 is configured to: update first storage information of the terminal device to second storage information based on the indication information; and establish a connection to the second DR based on the second storage information, where the first storage information includes a correspondence between an identifier of the terminal device and an address of a first DR, the second storage information includes a correspondence between the identifier of the terminal device and an address of the second DR, and the first DR is a DR that is in the first MEC and that corresponds to the terminal device.

The apparatus is used, so that the terminal device may establish a connection to the DR by using the indication information of the MEC, so that the terminal device can better receive a service.

An embodiment of this application further provides a communication apparatus. As shown in FIG. 11, the apparatus includes a transceiver unit 111 and a creation unit 112.

The transceiver unit 111 is configured to receive indication information of a second MEC, where a second DR is a DR that is in the second MEC and that corresponds to a terminal device, the second MEC is an MEC connected to the terminal device after the terminal device migrates from a first MEC, and the indication information indicates an association relationship between the terminal device and the second DR.

The creation unit 112 is configured to establish a connection to the terminal device based on the indication information.

The apparatus is applied to a communication system. The communication system includes an MEC and a DR, at least one DR is deployed on the MEC, the DR corresponds to one group of terminal devices, and one group of terminal devices include at least one terminal device. The DR is configured to provide a service for the group of terminal devices corresponding to the DR. The DR has at least one core network function, where the core network function includes mobility management, unified data management, session management, policy management, and/or access authentication and authorization.

The apparatus is used when cross-MEC migration occurs on the terminal device, a connection between the terminal device and the DR can still be maintained, so that the DR can provide a better service for the terminal device.

In a possible implementation, the creation unit 112 is configured to: determine second storage information based on the indication information, and establish a connection to the terminal device based on the second storage information, where the second storage information includes a correspondence between an identifier of the terminal device and an address of the second DR.

The apparatus is used, so that the DR may establish a connection to the terminal device by using the indication information of the MEC, and the DR can provide a better service for the terminal device.

In a possible implementation, the apparatus further includes: a context information transceiver unit, configured to: receive context information of a first DR, and update context information of the second DR based on the context information of the first DR, where the context information includes operation data that is generated when the first DR executes a service, user subscription information, and/or user personal identity information, and the first DR is a DR that is in the first MEC and that corresponds to the terminal device. The apparatus may migrate the context information of the first DR to the second DR, so that the second DR can provide a better service for the terminal device.

FIG. 12 is a schematic diagram of still another communication apparatus according to an embodiment of this application. The communication apparatus is configured to implement operations of the terminal device and the DR in the foregoing embodiments. As shown in FIG. 12, the communication apparatus includes a processor 1201 and an interface 1203. Optionally, the communication apparatus further includes a memory 1232. The interface 1203 is configured to communicate with another device.

The methods performed by the terminal device and the DR in the foregoing embodiments may be implemented by the processor 1201 by invoking a program stored in a memory (which may be a terminal device and the memory 1202 in the DR, or may be an external memory). To be specific, the terminal device and the DR may include the processor 1201. The processor 1201 invokes a program in the memory, to perform the method performed by the terminal device or the DR in the foregoing method embodiments. The processor herein may be an integrated circuit having a signal processing capability, for example, a CPU. The apparatus for implementing the method performed by the terminal device or the DR may be configured as one or more integrated circuits that implement the foregoing method, for example, one or more ASICs, one or more microprocessors DSPs, one or more FPGAs, or a combination of at least two of these integrated circuit forms. Alternatively, the foregoing implementations may be combined.

Specifically, functions/implementation processes of the transceiver unit 101 and the creation unit 102 in FIG. 10 may be implemented by the processor 1201 in a communication apparatus 1200 shown in FIG. 12 by invoking computer-executable instructions stored in the memory 1202. Alternatively, a function/an implementation process of the transceiver unit 101 in FIG. 10 may be implemented by the processor 1201 in the communication apparatus 1200 shown in FIG. 12 by invoking the computer-executable instructions stored in the memory 1202, and a function/an implementation process of the creation unit 102 in FIG. 10 may be implemented by the interface 1203 in the communication apparatus 1200 shown in FIG. 12.

Specifically, functions/implementation processes of the transceiver unit 111 and the creation unit 112 in FIG. 11 may be implemented by the processor 1201 in the communication apparatus 1200 shown in FIG. 12 by invoking the computer-executable instructions stored in the memory 1202. Alternatively, a function/an implementation process of the transceiver unit 111 in FIG. 11 may be implemented by the processor 1201 in the communication apparatus 1200 shown in FIG. 12 by invoking the computer-executable instructions stored in the memory 1202, and a function/an implementation process of the creation unit 112 in FIG. 11 may be implemented by the interface 1203 in the communication apparatus 1200 shown in FIG. 12.

All or some of the foregoing embodiments may be implemented by using software, hardware, firmware, or any combination thereof. When software is used to implement the embodiments, the embodiments may be completely or partially implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or any combination thereof. The general-purpose processor may be a microprocessor. Optionally, the general-purpose processor may also be any conventional processor, controller, microcontroller, or state machine. The processor may also be implemented by using a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a random access memory (random access memory, RAM), a flash memory, a read-only memory (read-only memory, ROM), an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information to the storage medium. Optionally, the storage medium may be integrated into the processor. The processor and the storage medium may be disposed in an ASIC.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

In one or more design examples, the functions described in this application may be implemented by using hardware, software, firmware, or any combination thereof. If the functions are implemented by software, the functions may be stored in a computer-readable medium, or transmitted to the computer-readable medium in a form of one or more instructions or code. The computer-readable medium includes a computer storage medium or a communication medium that enables a computer program to move from one place to another. The storage medium may be an available medium that may be accessed by any general-purpose or special computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of instructions or a data structure or in a form that can be read by a general-purpose or special computer or by a general-purpose or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is also included in the defined computer-readable medium. The disk (disk) and the disc (disc) include a compressed disk, a laser disk, an optical disc, a digital versatile disc (digital versatile disc, DVD), a floppy disk, and a Blu-ray disc. The disc generally copies data by a magnetic means, and the disk generally copies data optically by a laser means. The foregoing combination may also be included in the computer-readable medium.

It should be understood that, in embodiments of this application, "and/or" describes an association relationship between associated objects and represents that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a singular item (piece) or any combination of a plurality of items (pieces). For example, at least one item (piece) of a, b, or c may indicate a, b, c, a and b, a and c, b and c, or a, b, and c, where a, b, and c may be singular or plural. The terms "one", "a", "the", "the foregoing", "this", and "the one" of singular forms are also intended to include, for example, "one or more", unless otherwise specified in the context clearly. In addition, unless otherwise stated, ordinal numbers such as "first" and "second" in embodiments of this application are intended to distinguish between a plurality of objects, but are not intended to limit an order, a time sequence, priorities, or importance of the plurality of objects.

Referring to "an embodiment" or "some embodiments" or the like in the specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", but mean "one or more but not all embodiments", unless otherwise specifically emphasized in another manner. The terms "include", "comprise", "have", and their variants all mean "include but are not limited to", unless otherwise specifically emphasized in another manner.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing apparatus to generate a machine, so that the instructions executed by a computer or a processor of any other programmable data processing apparatus generate an apparatus for implementing a specific function in one or more processes in the flowcharts and/or in one or more blocks in the block diagrams.

These computer program instructions may also be stored in a computer-readable memory that can instruct the computer or any other programmable data processing apparatus to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may also be loaded onto a computer or another programmable data processing apparatus, so that a series of operations and steps are performed on the computer or the another programmable apparatus, to generate computer-implemented processing. Therefore, the instructions executed on the computer or the another programmable apparatus provide steps for implementing a specific function in one or more processes in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication system, comprising a multi-access edge computing MEC and a digital reflection DR, wherein at least one DR is deployed on the MEC, the DR corresponds to one group of terminal devices, and the group of terminal devices comprise at least one terminal device; and
the DR is configured to provide a service for the group of terminal devices corresponding to the DR, and the DR has at least one core network function, wherein the core network function comprises mobility management, unified data management, session management, policy management, and/or access authentication and authorization.

2. The communication system according to claim 1, wherein the communication system further comprises a life cycle management LCM system, wherein
the LCM is configured to manage operation information of the DR, the operation information of the DR comprises a life cycle of the DR and an address of the DR, and the life cycle indicates creation time information and deletion time information of the DR.

3. The communication system according to claim 2, wherein the LCM is specifically configured to:
create a DR for a first terminal device that newly joins the communication system; or
when the first terminal device migrates from a first MEC to a second MEC, reconstruct a corresponding DR for the first terminal device on the second MEC, or
when the first terminal device migrates from a first MEC to a second MEC, reconstruct a corresponding DR for the first terminal device on the second MEC, and delete a DR corresponding to the first terminal device on the first MEC, wherein
the first MEC and the second MEC are different.

4. The communication system according to claim 2, wherein the LCM is specifically configured to:
determine DRs that meet a preset condition and that are in the DRs as a DR group, wherein the preset condition is that the DRs belong to a same specified service group.

5. The communication system according to claim 4, wherein the LCM is further configured to:
when a first DR in the DR group stops serving the specified service group, delete the first DR.

6. The communication system according to any one of claims 1 to 5, wherein the communication system further comprises a distributed mapping system DMS, wherein the DMS is configured to store one or more of the following correspondences:
a correspondence between an identifier of the DR and the address of the DR;
a correspondence between an identifier of the terminal device and an address of the terminal device;
a correspondence between an identifier of the terminal device and an identifier of the DR;
a correspondence between an address of the terminal device and the address of the DR;
a correspondence between an identifier of the DR and an address of the terminal device;
a correspondence between an identifier of the terminal device and the address of the DR; and
a correspondence between a user identity carried by the terminal device and an identifier of the DR.

7. The communication system according to any one of claims 1 to 6, wherein the communication system further comprises a distributed data management system DDPS, wherein
the DDPS is configured to store operation data that is generated when the terminal device and a DR corresponding to the terminal device execute a service, user subscription information, and/or user personal identity information.

8. The communication system according to any one of claims 1 to 7, wherein storage information of the DR comprises: the correspondence between the identifier of the DR and the address of the DR, the correspondence between the identifier of the terminal device and the address of the terminal device, the correspondence between the identifier of the terminal device and the identifier of the DR, the correspondence between the address of the terminal device and the address of the DR, the correspondence between the identifier of the DR and the address of the terminal device, and the correspondence between the identifier of the terminal device and the address of the DR.

9. A server, wherein the server is deployed on a multi-access edge computing MEC, at least one digital reflection DR is deployed on the MEC, the DR corresponds to one group of terminal devices, and the group of terminal devices comprise at least one terminal device; and
the DR is configured to provide a service for the group of terminal devices corresponding to the DR, and the DR has at least one core network function, wherein the core network function comprises mobility management, unified data management, session management, policy management, and/or access authentication and authorization.

10. The server according to claim 9, wherein the server further comprises a distributed mapping system DMS;
a correspondence between an identifier of the DR and an address of the DR;
a correspondence between an identifier of the terminal device and an address of the terminal device;
a correspondence between an identifier of the terminal device and an identifier of the DR;
a correspondence between an address of the terminal device and an address of the DR;
a correspondence between an identifier of the DR and an address of the terminal device;
a correspondence between an identifier of the terminal device and an address of the DR; and
a correspondence between a user identity carried by the terminal device and an identifier of the DR.

11. The server according to claim 9 or 10, wherein the server further comprises a distributed data management system DDPS, wherein
the DDPS is configured to store operation data that is generated when the terminal device and a DR corresponding to the terminal device execute a service, user subscription information, and/or user personal identity information.

12. The server according to any one of claims 9 to 11, wherein storage information of the DR comprises: the correspondence between the identifier of the DR and the address of the DR, the correspondence between the identifier of the terminal device and the address of the terminal device, the correspondence between the identifier of the terminal device and the identifier of the DR, the correspondence between the address of the terminal device and the address of the DR, the correspondence between the identifier of the DR and the address of the terminal device, and the correspondence between the identifier of the terminal device and the address of the DR.

13. A communication method, wherein the method is applied to a communication system, the communication system comprises a multi-access edge computing MEC and a digital reflection DR, at least one DR is deployed on the MEC, the DR corresponds to one group of terminal devices, and the group of terminal devices comprise at least one terminal device; the DR is configured to provide a service for the group of terminal devices corresponding to the DR; the DR has at least one core network function, wherein the core network function comprises mobility management, unified data management, session management, policy management, and/or access authentication and authorization; and the method comprises:
when the terminal device migrates from a first MEC to a second MEC, receiving, by the terminal device, indication information of the second MEC, wherein the indication information indicates an association relationship between the terminal device and a second DR, and the second DR is a DR that is in the second MEC and that corresponds to the terminal device; and
establishing, by the terminal device, a connection to the second DR based on the indication information.

14. The method according to claim 13, wherein the establishing, by the terminal device, a connection to the second DR based on the indication information comprises:
updating, by the terminal device, first storage information of the terminal device to second storage information based on the indication information, wherein the first storage information comprises a correspondence between an identifier of the terminal device and an address of a first DR, the second storage information comprises a correspondence between the identifier of the terminal device and an address of a second DR, and the first DR is a DR that is in the first MEC and that corresponds to the terminal device; and
establishing, by the terminal device, a connection to the second DR based on the second storage information.

15. A communication method, wherein the method is applied to a communication system, the communication system comprises a multi-access edge computing MEC and a digital reflection DR, at least one DR is deployed on the MEC, the DR corresponds to one group of terminal devices, and the group of terminal devices comprise at least one terminal device; the DR is configured to provide a service for the group of terminal devices corresponding to the DR; the DR has at least one core network function, wherein the core network function comprises mobility management, unified data management, session management, policy management, and/or access authentication and authorization; and the method comprises:
receiving, by a second DR, indication information of a second MEC, wherein the second DR is a DR that is in the second MEC and that corresponds to the terminal device, the second MEC is an MEC connected to the terminal device after the terminal device migrates from a first MEC, and the indication information indicates an association relationship between the terminal device and the second DR; and
establishing, by the second DR, a connection to the terminal device based on the indication information.

16. The method according to claim 15, wherein the establishing, by the second DR, a connection to the terminal device based on the indication information comprises:
determining, by the second DR, second storage information based on the indication information, wherein the second storage information comprises a correspondence between an identifier of the terminal device and an address of the second DR; and
establishing, by the second DR, a connection to the terminal device based on the second storage information.

17. The method according to claim 15 or 16, wherein the method further comprises:
receiving, by the second DR, context information of a first DR, wherein the context information comprises operation data that is generated when the first DR executes a service, user subscription information, and/or user personal identity information, and the first DR is a DR that is in the first MEC and that corresponds to the terminal device; and
updating, by the second DR, context information of the second DR based on the context information of the first DR.

18. A communication apparatus, wherein the apparatus is applied to a communication system, the communication system comprises a multi-access edge computing MEC and a digital reflection DR, at least one DR is deployed on the MEC, the DR corresponds to one group of terminal devices, and the group of terminal devices comprise at least one terminal device; the DR is configured to provide a service for the group of terminal devices corresponding to the DR; the DR has at least one core network function, wherein the core network function comprises mobility management, unified data management, session management, policy management and/or access authentication and authorization; and the apparatus comprises:
a transceiver unit, configured to: when the terminal device migrates from a first MEC to a second MEC, receive indication information of the second MEC, wherein the indication information indicates an association relationship between the terminal device and a second DR, and the second DR is a DR that is in the second MEC and that corresponds to the terminal device; and
a creation unit, configured to establish a connection to the second DR based on the indication information.

19. A communication apparatus, wherein the apparatus is applied to a communication system, the communication system comprises a multi-access edge computing MEC and a digital reflection DR, at least one DR is deployed on the MEC, the DR corresponds to one group of terminal devices, and the group of terminal devices comprise at least one terminal device; the DR is configured to provide a service for the group of terminal devices corresponding to the DR; the DR has at least one core network function, wherein the core network function comprises mobility management, unified data management, session management, policy management and/or access authentication and authorization; and the apparatus comprises:
a transceiver unit, configured to receive indication information of a second MEC, wherein a second DR is a DR that is in the second MEC and that corresponds to the terminal device, the second MEC is an MEC connected to the terminal device after the terminal device migrates from a first MEC, and the indication information indicates an association relationship between the terminal device and the second DR; and
a creation unit, configured to establish a connection to the terminal device based on the indication information.

20. A communication apparatus, wherein the apparatus comprises a processor and a memory, the memory is configured to store computer-executable instructions, and when the apparatus runs, the processor executes the computer-executable instructions stored in the memory, to enable the apparatus to perform the method according to any one of claim 13 and 14 or the method according to any one of claims 15 to 17.

21. A computer-readable storage medium, wherein the computer-readable storage medium stores computer-readable instructions, and when a computer reads and executes the computer-readable instructions, the computer is enabled to perform the method according to any one of claim 13 and 14 or the method according to any one of claims 15 to 17.

22. A computer program product, wherein when a computer reads and executes the computer program product, the computer is enabled to perform the method according to any one of claim 13 and 14 or the method according to any one of claims 15 to 17.
